# EUROPÄISCHE PATENTSCHRIFT

(11) **EP 4 267 867 B1**
(45) Veröffentlichungstag und Bekanntmachung des Hinweises auf die Patenterteilung: **29.07.2026**
(21) Anmeldenummer: 22710545.9
(22) Anmeldetag: 01.03.2022
(51) Int. Cl.: B22F 1/105, C22C 9/02, B22F 7/08, F16D 69/02

(54) **REIBBELAGZUSAMMENSETZUNG FÜR KUPPLUNGEN VON WINDKRAFTANLAGEN UND REIBBELAG**
FRICTION LINING COMPOSITION FOR WIND TURBINE CLUTCHES, AND FRICTION LINING
COMPOSITION DE GARNITURE DE FRICTION POUR DES EMBRAYAGES D'ÉOLIENNE ET GARNITURE DE FRICTION

(30) Priorität: 23.03.2021 DE 102021107166
(43) Veröffentlichungstag der Anmeldung: 01.11.2023
(73) Patentinhaber: Federal-Mogul Deva GmbH, 35260 Stadtallendorf (DE)
(72) Erfinder: FEUSSNER, Miriam, 35239 Steffenberg (DE)
(74) Vertreter: Kurig, Thomas
(86) Internationale Anmeldenummer: PCT/EP2022/055079
(87) Internationale Veröffentlichungsnummer: WO 2022/199989

(56) Entgegenhaltungen:
- CN-A- 105 443 601
- CZ-B6- 278 738

## Beschreibung

Die Erfindung betrifft einen Reibbelag bzw. eine Reibbelagmischung bzw. einen Reibbelagwerkstoff, insbesondere für Kupplungsbeläge und Kupplungsscheiben von Windkraftanlagen, sowie einen Verbund eines Stützkörpers mit einer Reibschicht sowie die Verwendung des Verbundes für Kupplungsbeläge.

Derartige Reibwerkstoffe werden beispielsweise für Brems- und Kupplungsbeläge, z. B. für den Einsatz in Windkraftanlagen aber auch Kraftfahrzeugen und Schienenfahrzeugen benötigt. Darüber hinaus existiert eine Vielzahl anderer Anwendungen für derartige Reibwerkstoffe. Bekannte Reibwerkstoffrezepturen haben grundsätzlich folgenden schematischen Aufbau:
- Metall-Fasern und/oder -Pulver
- Funktionale Füllstoffe (z. B. Glasfasern zur Verstärkung, Metalloxide als Reibwertgeber, etc.)
- Festschmierstoffe
- Organische Verbindungen (Harze, Kautschuk, Fasern, etc.)

Neben den technischen Anforderungen an die Reibwerkstoffentwicklung, wie üblicherweise die Steigerung der Leistungsfähigkeit, der Lebensdauer und der Betriebsparameter, nehmen die Anforderungen bezüglich des Umweltschutzes an die Reibwerkstoffentwicklung einen immer bedeutenderen Stellenwert ein.

Durch die EP 0 654 616 B1 ist eine Reibbelagmischung für Brems- und Kupplungsbeläge bekannt, die zur Reduzierung der Rissanfälligkeit des Reibpartners anstelle der bis dahin üblichen Antimonsulfide Zinnsulfide enthält. Mit dem Einsatz von Zinnsulfiden anstelle der bis dahin üblichen Antimonsulfide in der Reibbelagmischung soll die bei hohen Spitzentemperaturbelastungen auftretende Oberflächenrissanfälligkeit des Reibpartners verringert werden.

Nach dem Patentdokument mit der Veröffentlichungsnummer DD-208 829 B1 ist der Einsatz von Speckstein bzw. Talkum bekannt, wobei Ausgangsstoffe mit 79 % Cu, 7% Sn, 9% Speckstein verwendet werden.

Aus dem Patentdokument DE- 1164305 ist ein Verfahren zur Herstellung eines keramischen Reibkörpers bekannt.

Die europäische Patentschrift EP 0 093 673 B1 beschreibt eine Reibbelagmischung auf Eisenbasis. Neben 72 bis 85 Gewichtsprozent pulverförmigen Eisens umfasst die dortige Reibbelagmischung 3 bis 14 Gewichtsprozent Graphit, 2 bis 12 Gewichtsprozent Koks, 3 bis 10 Gewichtsprozent eines niedrig schmelzenden Materials, wie beispielsweise Zinn, und bis zu 3 Gewichtsprozent reibungsmodifizierenden Additives. Bei der Herstellung des Bremsbelages aus dieser Mischung verschmelzen das Eisen und das Zinn zu einer Legierung unter Bildung einer Matrix, in die der Graphit, der Koks und das Additiv in einer relativ fixen Position eingebettet sind. Das Verhältnis von Eisenpulver zu Zinn sollte nach diesem Dokument etwa 12 zu 1 betragen.

Aus Patentdokument CZ 278 738 B6 ist ein Metall-Keramik-Reibwerkstoff auf Bronzebasis, insbesondere für Trockenreibung, das durch pulvermetallurgische Verfahren hergestellt wird. Der Reibwerkstoff enthält 50 bis 65 Gew.-% Kupfer (Cu), 3 bis 7 Gew.-% Zinn (Sn), 4 bis 10 Gew.-% Eisen (Fe), 8 bis 13 Gew.-% Graphit (C), 4 bis 6 Gew.-% Talk (Mg 3 (Si 4 O 10) (OH) 2) und 6 bis 15 Gew.-% Zirkoniumsilikat (ZrSiO 4).

Die Anforderungen an Kupplungen im Windenergie-Anlagenbereich steigen, aufgrund der immer weiter erhöhten Baugrößen der Turbinen. Daher werden Kupplungsscheiben mit höherem Reibwert benötigt, wodurch die Drehmomentaufnahme verbessert wird und ein kleineres und damit günstigeres Design von Kupplungen ermöglicht wird. Es wäre daher wünschenswert ein Reibmaterial und eine Kupplungsscheibe zur Verfügung zu stellen, deren Reibwert stabil ist, deren Verschleißrate kleiner ist als bei den aktuell verwendeten Materialien und die den Reibpartner im Betrieb nicht beschädigt.

Es ist daher Aufgabe der Erfindung, eine Reibbelagmischung bereitzustellen, die für Kupplungsbeläge von Windkraftanlagen geeignet ist und mit der eine erhebliche Steigerung der Leistungsfähigkeit der Reibpaarung durch höhere und stabilere Reibmomente erzielt wird, was letztendlich eine höhere Verlässlichkeit und Lebensdauer zur Folge hat.

Diese Aufgabe wird gelöst durch Gegenstände mit den Merkmalen der Ansprüche 1 und 5.

Die Erfindung stellt einen Reibbelagwerkstoff auf Basis von Sinterbronze für mit einem Reibpartner zusammenwirkende Kupplungsbeläge für Windkraftanlagen bereit. Der Reibbelagwerkstoff, umfasst dabei eine Sinterbronze mit einem Kupferanteil in der Bronzelegierung 60 Gew.-% - 95 Gew.-%, vorzugsweise 80 Gew.-% - 95 Gew.-%. Die Sinterbronze umfasst dabei metallisches Zinn zur Erhöhung des Reibwerts mit einem Gewichtsanteil von 5 Gew.-% - 40 Gew.-%, vorzugsweise von 10 Gew.-% - 30 Gew.-%,. In der Sinterbronze ist weiter Talkum als Festschmierstoff mit 2 Gew.-% - 15 Gew.-%, vorzugsweise 2,5 Gew.-% - 7,5 Gew.-% eingebettet. Die Summe der Bestandteile addieren sich dabei zu 100% Gew.-%, wobei das Talkum Korngrößen zwischen 10 µm -1000 µm, bevorzugt zwischen 100 µm und 800 µm und weiter bevorzugt zwischen 200 µm und 600 µm aufweist.

Insgesamt wird eine Sinterbronze mit einer Metallmatrix von Cu: 60-95% und Sn: 5-40% angestrebt, in der ein Festschmierstoffanteil von Talkum mit 2-15% eingebettet ist. Durch den Einsatz von Talkum in den Korngrößen 10µm - 1000µm kann die Bronzelegierung so modifiziert werden, dass ein Reibwert zwischen µ =0,40 und µ =0,65 bei den in der Anwendung typischen Lasten und Geschwindigkeiten erreicht werden kann. Hier und im Folgenden wird der Reibwert bzw der Reibungskoeffizient µ immer als der Haftreibwert bzw. Haftreibungskoeffizient µ_{H} verstanden, da die vorliegende Erfindung auf Kupplungsanwendungen gerichtet ist. Der Reibwert µ bzw µ_{H} ist dabei immer gegen Stahl als Reibpartner angegeben. Außerdem konnte in Bezug auf bekannte Materialien eine Erhöhung der Verschleißfestigkeit erreicht werden. Die relativ großen Korngrößen des Talkum ermöglichen eine bessere Verteilung des Feststoffschmiermittels.

Es wird nicht beansprucht, dass der Reibbelagswerkstoff hergestellt ist, indem Kupfer und Zinn als Elementarpulver mit bevorzugt dendritischer Kornform mit Talkum als Festschmierstoff versintert wurden. Die Gleitschichtpulvermischung kann dabei auf einen Stützkörper, in genau definiertem Gewicht und Höhe aufgepulvert werden. Dieser Stützkörper wird mit dem Gleitschichtpulver im Brandmetallofen bei definierter Temperatur, etwa 800 °C, unter Schutzatmosphäre vorgesintert und anschließend gepresst oder bevorzugt heißgewalzt bei exakter Temperaturführung und gesintert. Der so entstandene Verbund, kann durch anschließendes Pressen oder bevorzugt Kaltwalzen weiter verdichtet werden wodurch ein verschleißfester Verbund mit hoher Dichte aus Stützkörper und Gleit-/Reibschicht erzielt werden kann.

Es wird nicht beansprucht, dass der Reibbelagwerkstoff durch den erhöhten Zinnanteil einen Reibwert zwischen µ=0,40 und µ=0,65 gegenüber Stahl aufweist. Im Prinzip kann auch Gusseisen oder Keramik als Reibpartner eingesetzt werden. Das Material des Reibpartners ist dabei jedoch nicht von überragender Wichtigkeit, da ein Übertrag des Reibbelagwerkstoffs auf den Gegenläufer stattfindet, der einen sogenannten Transferfilm ausbildet, welcher dazu führt, dass ein Großteil der Reibung als Reibpaarung auftritt. Durch den Transferfilm, der durch den hohen Zinnanteil ausgeprägter und gleichmäßiger ist, findet keine Schädigung an dem Gegenläufer statt. Der Reibwert soll dabei gemäß DIN ISO 7148-2 zwischen µ=0,40 und µ=0,65 gemessen werden, wobei ein Plattenprüfstand eingesetzt werden kann.

In einer Ausführungsform des Reibbelagwerkstoffs besteht die Metallmatrix aus 79 bis 85 Gew.-%, bevorzugt 80,55 Gew.-% Kupfer und 10-14 Gew.-%, bevorzugt 12,04 Gew.-%. Zinn, wobei die Legierung einen Festschmierstoffanteil von 6 - 9 Gew.-%, bevorzugt 7,4 Gew.-% Talkum aufweist. Diese Mischung hat sich im Reibversuch als geeignet und bezüglich der bekannten Reibbelagswerkstoffe vorteilhaft erwiesen.

In einer anderen Ausführungsform des Reibbelagwerkstoffs besteht die Metallmatrix aus 79 bis 88 Gew.-% bevorzugt 84,47 Gew.-% Kupfer und 10 - 15 Gew.-%, bevorzugt 12,62 Gew. % Zinn, wobei die Legierung einen Festschmierstoffanteil von 1,5 - 4,5 Gew.-%, bevorzugt 2,9 Gew.-% Talkum aufweist. Diese Mischung zeigt im Reibversuch ebenfalls vorteilhafte Eigenschaften.

In einer anderen Ausführungsform des Reibbelagwerkstoffs besteht die Metallmatrix aus 60 bis 70 Gew. %, bevorzugt 62 bis 67 Gew. % Kupfer und 30 - 40 Gew. %, bevorzugt 32 bis 37 Gew. %. Zinn, wobei die Legierung einen Festschmierstoffanteil von 1,5 - 4,5 Gew. %, bevorzugt 2,5 bis 4 Gew.-% Talkum aufweist.

Gemäß einem weiteren Aspekt der vorliegenden Erfindung wird ein Verbund mit hoher Dichte aus einem metallischem Stützkörper aus der Gruppe aus Stahl, Edelstahl oder Kupfer und einer Gleit-/Reibeschicht aus einer gesinterten Bronzeschicht mit Kupfer mit einem Gewichtsprozentanteil von 60 Gew-.% - 95 Gew. % und Zinn mit einem Gewichtsprozentanteil von 5 Gew. % - 40 Gew. %, wobei der Festschmierstoffanteil von Talkum 1,5 Gew. % - 15 Gew. % beträgt bereitgestellt, wobei das Talkum Korngrößen zwischen 10 µm -1000 µm, bevorzugt zwischen 100 µm und 800 µm und weiter bevorzugt zwischen 200 µm und 600 µm aufweist, wobei der Verbund eine Kupplung oder einen Kupplungsbelag für eine Windkraftanlage oder ein Bremsbelag für eine Windkraftanlage ist.

Es wird nicht beansprucht, dass der Verbund mit hoher Dichte eines der vorstehend beschriebenen Reibbelagmaterialien umfasst.

Bei einer beispielhaften Ausführung des Verbunds ist das Reibbelagmaterial als Gleitschichtpulver auf den Stützkörper aufgesintert worden. Das Sintern kann beispielsweise als Pressintern oder bevorzugt als Heißpressen ausgeführt werden. In einer noch weiter bevorzugen Ausführungsform des Verbunds ist das Reibbelagmaterial als in Pulverform einem Heißwalzverfahren auf den Stützkörper aufgesintert worden.

Es wird nicht beansprucht, dass eine Verwendung des vorstehend beschriebenen Verbundes für Kupplungsbeläge mit erhöhten Reibwerten zwischen µ=0,40 und µ=0,65 bereitgestellt wird.

Im Folgenden wird die vorliegende Erfindung anhand von beispielhaften Darstellungen der vorliegenden Erfindung veranschaulicht.

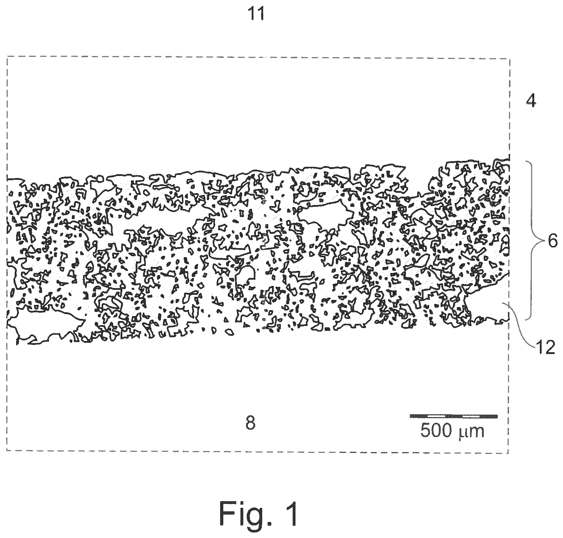

Figur 1 zeigt einen Schliff durch einen Probenkörper mit zugehörigem Größenmaßstab.

Figur 1 zeigt einen geätzten Feinschliff entlang eines Querschnitts durch einen Probenkörper, wobei das Kupfer Cu und Zinn Sn durch das Ätzen sichtbar sind. Figur 1 zeigt unten einen hellen Trägerkörper 8. Auf den Trägerkörper ist das Reibmaterial 6 zu erkennen. Oberhalb des Reibmaterials 6 ist der Kunststoff 4 zu erkennen, in dem der Probenkörper für den Feinschliff eingebettet wurde. Das Reibmaterial umfasst dabei eine feinkörnige Struktur. Die großen zusammenhängenden schwarzen Bereiche werden hier durch Talkumkörner 12 gebildet, die als Schmiermittel in die Sinterbronze eingelassen sind.

Eine beispielhafte Zusammensetzung eines Reibbelagmaterials umfasst eine Metallmatrix aus 60 bis 70 Gew. %, bevorzugt 62 bis 67 Gew. % Kupfer und 30 - 40 Gew. %, bevorzugt 32 bis 37 Gew. %. Zinn besteht, wobei die Legierung einen Festschmierstoffanteil von 1,5 -4,5 Gew. %, bevorzugt 2,5 bis 4 Gew.-% Talkum aufweist. Dies ist eine sehr zinnreiche Legierung die eine besonders hohe Haftfestigkeit aufweist, die sich für Kupplungen eignet, jedoch als Reibbelagmaterial für Bremsanwendungen weniger gut geeignet ist.

Getestet wurde ein platten- bzw. scheibenförmiger Probenkörper, der einer oszillierenden transitionalen Bewegung mit einer Hublänge zwischen 1 und 50mm unterworfen wurde. Die Gleitgeschwindigkeit lag zwischen 0.003 - 0.03 m/s. Es wurde eine Maximalbelastung von 400 kN ermöglicht. Der Reibwert wurde (im Wesentlichen) bei Zimmertemperatur durchgeführt. Der Probenkörper weist einen Durchmesser von typischerweise 80mm auf, die Maximale spezifische Last beträgt 80 MPa. Eine Verschleißmessung wurde mit Wirbelstromsensoren durchgeführt. Kraftmessungen wurden mit zwei Lastzellen des Typs U10 von HPM durchgeführt. Eine Temperaturmessung wurde an dem Gegenstück durchgeführt.

In einem ersten erfindungsgemäßen Beispiel des Reibbelagwerkstoffs wurde eine Metallmatrix aus 80,55 Gew.-% Kupfer und 12,04 Gew.-%. Zinn verwendet, wobei die Legierung einen Festschmierstoffanteil von 7,4 Gew.-% Talkum aufweist. Diese Mischung hat sich im Reibversuch als geeignet und gegenüber den bekannten Reibbelagswerkstoffen vorteilhaft erwiesen. Der Reibwert betrug dabei gemäß DIN ISO 7148-2 zwischen µ=0,40 und µ=0,65, wobei ein Plattenprüfstand wie im vorstehenden Abschnitt beschrieben eingesetzt wurde. Die Last im Test betrug dabei 10-40MPa.

In einem zweiten Beispiel des Reibbelagwerkstoffs wurde eine Metallmatrix aus 84,47 Gew.-% Kupfer und 12,62 Gew. % Zinn verwendet, wobei die Legierung einen Festschmierstoffanteil von 2,9 Gew.-% Talkum aufweist. Diese Mischung zeigte im Reibversuch ebenfalls vorteilhafte Eigenschaften. Der Reibwert betrug dabei gemäß DIN ISO 7148-2 zwischen µ=0,40 und µ=0,65, wobei ein Plattenprüfstand eingesetzt wurde.

## Patentansprüche

1. Reibbelagwerkstoff auf Basis von Sinterbronze für mit einem Reibpartner zusammenwirkende Kupplungsbeläge für Windkraftanlagen, in der als Festschmierstoff 2 Gew.-% - 15 Gew.-%, vorzugsweise 2,5 Gew.-% - 7,5 Gew.-% Talkum eingebettet sind, **dadurch gekennzeichnet, dass** die Sinterbronze bzw. Bronzelegierung zur Erhöhung des Reibwerts metallisches Zinn mit einem Gewichtsanteil von 5 Gew.-% - 40 Gew.-%, vorzugsweise von 10 Gew.-% - 30 Gew.-%, enthält, wobei der Kupferanteil in der Bronzelegierung 60 Gew.-% - 95 Gew.-%, vorzugsweise 80 Gew.-% - 95 Gew.-%, beträgt, wobei sich die Summe der Bestandteile zu 100% Gew. % addieren, **dadurch gekennzeichnet, dass** das Talkum Korngrößen zwischen 10 µm und 1000 µm, bevorzugt zwischen 100 µm und 800 µm und weiter bevorzugt zwischen 200 µm und 600 µm aufweist.

2. Reibbelagwerkstoff gemäß Anspruch 1, **dadurch gekennzeichnet, dass** die Metallmatrix aus 79 bis 85 Gew.-%, bevorzugt 80,55 Gew.-% Kupfer und 10-14 Gew.-%, bevorzugt 12,04 Gew.-%. Zinn besteht, wobei die Legierung einen Festschmierstoffanteil von 6 - 9 Gew.-%, bevorzugt 7,4 Gew.-% Talkum aufweist.

3. Reibbelagwerkstoff gemäß Anspruch 1, **dadurch gekennzeichnet, dass** die Metallmatrix aus 79 bis 88 Gew.-%, bevorzugt 84,47 Gew.-% Kupfer und 10 - 15 Gew.-%, bevorzugt 12,62 Gew.-%. Zinn besteht, wobei die Legierung einen Festschmierstoffanteil von 1,5 - 4,5 Gew.-%, bevorzugt 2,9 Gew.-% Talkum aufweist.

4. Reibbelagwerkstoff gemäß Anspruch 1, **dadurch gekennzeichnet, dass** die Metallmatrix aus 60 bis 70 Gew. %, bevorzugt 62 bis 67 Gew. % Kupfer und 30 - 40 Gew. %, bevorzugt 32 bis 37 Gew. %. Zinn besteht, wobei die Legierung einen Festschmierstoffanteil von 1,5 - 4,5 Gew. %, bevorzugt 2,5 bis 4 Gew. % Talkum aufweist.

5. Verbund mit hoher Dichte aus einem metallischem Stützkörper aus der Gruppe aus Stahl, Edelstahl oder Kupfer und einer Gleit-/Reibeschicht aus einer gesinterten Bronzeschicht mit Kupfer mit einem Gewichtsprozentanteil von 60 Gew-.% - 95 Gew.-% und Zinn mit einem Gewichtsprozentanteil von 5 Gew.-% - 40 Gew.-%, wobei der Festschmierstoffanteil von Talkum 1,5 Gew.-% - 15 Gew.-% beträgt, **dadurch gekennzeichnet**, das Talkum Korngrößen zwischen 10 µm und 1000 µm, bevorzugt zwischen 100 µm und 800 µm und weiter bevorzugt zwischen 200 µm und 600 µm aufweist und wobei der Verbund eine Kupplung oder ein Kupplungsbelag für eine Windkraftanlage oder ein Bremsbelag für eine Windkraftanlage ist

6. Verbund nach Anspruch 5, **dadurch gekennzeichnet, dass** der Stützkörper mit dem Gleitschichtpulver aufgesintert worden ist und bevorzugt im Heißwalzverfahren aufgesintert worden ist.

## Claims

1. Friction lining material based on sintered bronze for clutch linings for wind turbines cooperating with a friction partner, in which, as a solid lubricant, 2 wt.-% - 15 wt.-%, preferably 2.5 wt.-% - 7.5 wt.-% talc is embedded,
**characterized in that**
the sintered bronze or bronze alloy contains, for increasing the coefficient of friction,
metallic tin in a proportion by weight of 5 wt.-% - 40 wt.-%, preferably of 10 wt.-% - 30 wt.-%, wherein the copper content in the bronze alloy is 60 wt.-% - 95 wt.-%, preferably 80 wt.-% - 95 wt.-%, wherein the sum of the constituents adds up to 100 wt.-%,
**characterized in that**
the talc has grain sizes between 10 µm and 1000 µm, preferably between 100 µm and 800 µm and more preferably between 200 µm and 600 µm.

2. Friction lining material according to claim 1,
**characterized in that**
the metal matrix consists of 79 to 85 wt.-%, preferably 80.55 wt.-% copper, and 10 - 14 wt.-%, preferably 12.04 wt.-% tin, wherein the alloy has a solid lubricant content of 6 - 9 wt.-%, preferably 7.4 wt.-% talc.

3. Friction lining material according to claim 1, **characterized in that** the metal matrix consists of 79 to 88 wt.-%, preferably 84.47 wt.-% copper, and 10 - 15 wt.-%, preferably 12.62 wt.-% tin, wherein the alloy has a solid lubricant content of 1.5 - 4.5 wt.-%, preferably 2.9 wt.-% talc.

4. Friction lining material according to claim 1, **characterized in that** the metal matrix consists of 60 to 70 wt.-%, preferably 62 to 67 wt.-% copper, and 30 - 40 wt.-%, preferably 32 to 37 wt.-% tin, wherein the alloy has a solid lubricant content of 1.5 - 4.5 wt.-%, preferably 2.5 to 4 wt.-% talc.

5. Composite of high density, made of a metallic support body selected from the group consisting of steel, stainless steel or copper, and a sliding / friction layer made of a sintered bronze layer having copper in a percentage by weight of 60 wt.-% - 95 wt.-% and tin in a percentage by weight of 5 wt.-% - 40 wt.-%, wherein the solid lubricant content of talc is 1.5 wt.-% - 15 wt.-%,
**characterized in that**
the talc has grain sizes between 10 µm and 1000 µm, preferably between 100 µm and 800 µm and more preferably between 200 µm and 600 µm, and wherein the composite is a clutch or a clutch lining for a wind turbine or a brake lining for a wind turbine.

6. Composite according to claim 5,
**characterized in that**
the sliding layer powder has been sintered onto the support body, preferably in a hot-rolling process.

## Revendications

1. Matériau de garniture de friction à base de bronze fritté destiné à des garnitures d'embrayage interagissant avec un partenaire de friction pour des éoliennes, dans lequel 2 % en poids - 15 % en poids, de préférence de 2,5 % en poids - 7,5 % en poids, de talc, **caractérisé en ce que** le bronze fritté ou l'alliage de bronze contient, pour augmenter le coefficient de frottement, de l'étain métallique dans une proportion de 5 % en poids - 40 % en poids, de préférence de 10 % en poids % à 30 % en poids, la teneur en cuivre de l'alliage de bronze étant comprise entre 60 % et 95 % en poids, de préférence entre 80 % et 95 % en poids, la somme des composants s'élevant à 100 % en poids %, **caractérisé en ce que** le talc présente des tailles de grains comprises entre 10 µm et 1 000 µm, de préférence entre 100 µm et 800 µm et, de manière encore plus préférée, entre 200 µm et 600 µm.

2. Matériau de garniture de friction selon la revendication 1, **caractérisé en ce que** la matrice métallique est constituée de 79 à 85 % en poids, de préférence 80,55 % en poids, de cuivre et de 10 à 14 % en poids, de préférence 12,04 % en poids, d'étain, l'alliage présente une proportion de lubrifiant solide de 6 à 9 % en poids, de préférence 7,4 % en poids de talc.

3. Matériau de garniture de friction selon la revendication 1, **caractérisé en ce que** la matrice métallique est constituée de 79 à 88 % en poids, de préférence 84,47 % en poids, de cuivre et de 10 à 15 % en poids, de préférence 12,62 % en poids, d'étain, l'alliage présente une teneur en lubrifiant solide de 1,5 à 4,5 % en poids, de préférence de 2,9 % en poids de talc.

4. Matériau de garniture de friction selon la revendication 1, **caractérisé en ce que** la matrice métallique est constituée de 60 à 70 % en poids, de préférence de 62 à 67 % en poids % de cuivre et de 30 à 40 % en poids, de préférence de 32 à 37 % en poids d'étain, l'alliage présente une teneur en lubrifiant solide de 1,5 à 4,5 % en poids, de préférence de 2,5 à 4 % en poids de talc.

5. Composite à haute densité constitué d'un corps de support métallique choisi parmi le groupe comprenant l'acier, l'acier inoxydable ou le cuivre, et d'une couche de glissement/frottement, constituée d'une couche de bronze fritté contenant du cuivre à raison de 60 % en poids à 95 % en poids et d'étain avec une teneur en poids de 5 % à 40 % en poids, la teneur en lubrifiant solide de talc étant comprise entre 1,5 % et 15 % en poids, **caractérisé en ce que** le talc présente des tailles de grains comprises entre 10 µm et 1 000 µm, de préférence entre 100 µm et 800 µm et, de manière encore plus préférée, entre 200 µm et 600 µm et **en ce que** le composite est un embrayage ou une garniture d'embrayage pour une éolienne ou une garniture de frein pour une éolienne.

6. Composite selon la revendication 5, **caractérisé en ce que** le corps de support a été fritté avec la poudre de la couche de glissement et a de préférence été fritté par un procédé de laminage à chaud.
